# FASCICULE DE BREVET EUROPEEN

(11) **EP 2 808 153 B1**
(45) Date de publication et mention de la délivrance du brevet: **19.10.2016**
(21) Numéro de dépôt: 14167165.1
(22) Date de dépôt: 06.05.2014
(51) Int. Cl.: B29C 49/58, B29C 49/78, B29C 49/12, B29C 49/42

(54) **Installation de formage comportant une vanne commandée par un fluide de pilotage et équipée d'une assistance magnétique**
Umformanlage, die ein Ventil umfasst, das durch eine Steuerflüssigkeit gesteuert wird und mit einer Magnethilfsvorrichtung ausgestattet ist
Forming system comprising a valve controlled by a control fluid and provided with magnetic assistance

(30) Priorité: 27.05.2013 FR 1354734
(43) Date de publication de la demande: 03.12.2014
(73) Titulaire: SIDEL PARTICIPATIONS, 76930 Octeville-sur-Mer (FR)
(72) Inventeur: Lemble, Thierry, 76930 Octeville sur Mer (FR)
(74) Mandataire: Siloret, Patrick

(56) Documents cités:
- EP-A1- 2 335 904
- DE-A1- 19 636 781
- DE-A1-102010 034 761
- FR-A- 1 429 857
- GB-A- 2 119 481

## Description

L'invention concerne une installation de formage d'un récipient en matériau thermoplastique par soufflage d'une préforme au moyen d'un fluide de soufflage sous pression, l'installation comportant au moins une vanne de distribution du flux de fluide de soufflage.

L'invention concerne plus particulièrement une installation de formage d'un récipient en matériau thermoplastique par soufflage d'une préforme au moyen d'un fluide de soufflage sous pression, l'installation comportant au moins une vanne de distribution du flux de fluide de soufflage, la vanne de distribution comportant :
- un piston qui divise de manière étanche un cylindre fixe en une première chambre de travail et une deuxième chambre de travail, et qui est monté coulissant dans le cylindre entre une première position de commutation dans laquelle la deuxième chambre présente un volume maximal et une deuxième position de commutation dans laquelle la deuxième chambre présente un volume minimal ;
- des premiers moyens commandés de la pression d'un fluide de pilotage dans la première chambre de travail permettant de déplacer le piston vers sa deuxième position de commutation par augmentation de la pression du fluide de pilotage.

Les installations de formage de récipients par soufflage en grande série comportent généralement une pluralité de moules qui sont alimentés successivement par des préformes en matériau thermoplastique préchauffées.

Chaque moule comporte une tuyère de soufflage qui permet d'injecter dans la préforme un fluide de soufflage sous pression, généralement formé par de l'air. Le fluide de soufflage est par exemple injecté à une pression de 40 bars.

Le formage du récipient par soufflage est avantageusement accompagné d'une opération d'étirage par une tige d'étirage. La tige d'étirage permet ainsi d'étirer le matériau thermoplastique malléable selon l'axe principal de la préforme, tandis que le soufflage permet d'étirer le matériau plastique circonférentiellement. Un tel procédé est connu sous le nom d'étirage-soufflage ou soufflage bi-orienté.

Certains procédés de formage proposent aussi de réaliser l'opération de soufflage en deux temps. Pendant un premier temps, le fluide de soufflage est injecté dans la préforme à basse pression, par exemple à 12 bars, puis le fluide de soufflage est injecté à haute pression, par exemple à 40 bars, pour permettre de plaquer fortement le récipient contre les parois du moule.

Dans un souci d'économie d'énergie, on a récemment proposé de récupérer l'air de soufflage sous pression contenu dans le récipient en fin de formage afin de le stocker dans un réservoir. Ceci permet de réutiliser l'air sous pression résiduel.

Toutes ces opérations nécessitent d'employer un ensemble de vannes permettant de distribuer le flux de fluide de soufflage depuis les sources de fluide comprimé vers la préforme, ainsi que depuis la préforme vers le réservoir de récupération.

Jusqu'à présent, chaque vanne de distribution comporte un piston de commande qui est mobile entre :
- une première position de commutation, correspondant par exemple à l'ouverture de la vanne ; et
- une deuxième position de commutation, correspondant par exemple à la fermeture de la vanne.

Chaque vanne est associée à un dispositif de pilotage qui commande la pression d'un fluide de pilotage dans les chambres de la vanne de distribution. Le piston de la vanne de distribution est ainsi poussé vers l'une ou l'autre de ses positions de commutation par alimentation alternée des chambres de travail avec le fluide de pilotage sous pression. Le fluide de pilotage a l'avantage de présenter une pression beaucoup moins élevée que le fluide de soufflage, la pression du fluide de pilotage étant par exemple comprise entre 5 et 8 bars.

Dans le cadre d'une production de récipients en grandes séries, les installations de formage sont conçues pour produire des récipients à des cadences de plus en plus élevées. Ceci implique de pouvoir piloter de plus en plus précisément l'ouverture et la fermeture des vannes de distribution.

Or, on a constaté que le temps de réponse des vannes de distribution à piston existantes présente des disparités qui s'accentuent avec l'usure.

Plus précisément, la chambre de travail est initialement à la pression atmosphérique lorsque la commutation de la vanne de distribution est commandée. La pression dans la chambre de travail se met alors à augmenter. Lorsque la pression est suffisante pour vaincre les forces résistantes statiques, notamment le frottement statique et l'inertie, appliquées au piston, alors le piston commence son coulissement vers sa deuxième position de commutation.

Il en résulte que le délai entre la commande électrique du dispositif de pilotage et le début de la course du piston est variable en fonction du frottement statique.

Or, les forces résistantes statiques, et notamment le frottement statique entre le piston et son cylindre, ont tendance à augmenter avec l'usure du dispositif. Ainsi, le temps de réponse de la vanne augmente avec le temps.

Par conséquent le délai entre le signal électrique et l'ouverture effective totale du canal d'alimentation en fluide de soufflage est la somme du délai de début de coulissement et du temps de course du piston.

Cette incertitude sur le temps de réponse est susceptible de limiter la cadence de fonctionnement de l'installation de soufflage et d'altérer la qualité esthétique du récipient formé.

Le document FR-A1-1.429.857 propose une vanne dans laquelle le piston est bloqué dans une position par des aimants permanents jusqu'à ce qu'une pression suffisante soit appliquée à la chambre de travail pour débloquer le piston. Une telle vanne permet d'éviter le déplacement accidentel du piston, mais elle ne permet pas d'améliorer le temps réponse de la vanne car le coulissement du piston est au contraire retardé.

Le document GB-A-2.119.481 propose une vanne dans laquelle la pression de fluide dans chaque chambre est commandée par un électroaimant. Néanmoins, une telle vanne ne permet pas d'améliorer le temps de réponse du piston indépendamment de son usure.

L'invention propose une installation de formage qui est munie d'un dispositif de soufflage dont le temps de réponse reste stable indépendamment de l'usure du dispositif.

L'invention propose ainsi une installation de formage du type décrit précédemment, caractérisée en ce que le piston comporte au moins un élément ferromagnétique, la vanne de distribution comportant des premiers moyens commandés d'émission d'un champ magnétique agissant sur l'élément ferromagnétique pour donner au piston, dans sa première position, une impulsion de déplacement vers sa deuxième position.

Selon d'autres caractéristiques de l'invention :
- l'élément ferromagnétique du piston possède une aimantation permanente de manière à former un dipôle magnétique ;
- le champ magnétique émis par les premiers moyens commandés est orienté de manière à repousser l'élément ferromagnétique vers la deuxième position du piston ;
- l'axe polaire de l'élément ferromagnétique est orienté parallèlement à la direction de coulissement du piston ;
- les premiers moyens d'émission du champ magnétique sont agencés à une extrémité du cylindre, à proximité de la première chambre ;
- l'installation comporte des deuxièmes moyens commandés de la pression d'un fluide de pilotage dans la deuxième chambre de travail permettant de déplacer le piston depuis sa deuxième position vers sa première position de commutation par augmentation de la pression du fluide de pilotage ;
- l'installation comporte des deuxièmes moyens commandés de production d'un champ magnétique agissant sur l'élément ferromagnétique pour donner au piston, dans sa deuxième position, une impulsion de déplacement vers sa première position ;
- le champ magnétique émis par les deuxièmes moyens d'émission du champ magnétique est orienté de manière à repousser l'élément ferromagnétique vers la deuxième position du piston ;
- les deuxièmes moyens d'émission du champ magnétique sont agencés à une extrémité du cylindre opposée aux premiers moyens démission du champ magnétique, à proximité de la deuxième chambre ;
- chaque moyen d'émission du champ magnétique est formé par un solénoïde associé susceptible d'être alimenté en courant électrique pour émettre un champ magnétique.

L'invention concerne aussi un procédé pour commander le coulissement du piston de la vanne de l'installation selon l'invention depuis l'une de ses positions de commutation dite "initiale" jusqu'à l'autre position de commutation dite "finale", caractérisé en ce que les moyens associés de production du champ magnétique et les moyens associés commandés d'augmentation de pression sont activés simultanément.

Selon une autre caractéristique du procédé, les moyens de production du champ magnétique sont désactivés avant que le piston n'ait atteint sa position de commutation finale.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue schématique qui représente une installation de formage de récipients en matériau thermoplastique par étirage-soufflage ;
- la figure 2 est une vue en coupe qui représente une des vannes de distribution de l'installation de la figure 1 réalisée selon les enseignements de l'invention, le piston occupant une première position de commutation ;
- la figure 3 est une vue en coupe qui représente la vanne de distribution de la figure 2 dans laquelle le piston occupe une deuxième position de commutation.

Par la suite, des éléments présentant une structure identique ou des fonctions analogues seront désignés par des mêmes numéros de référence.

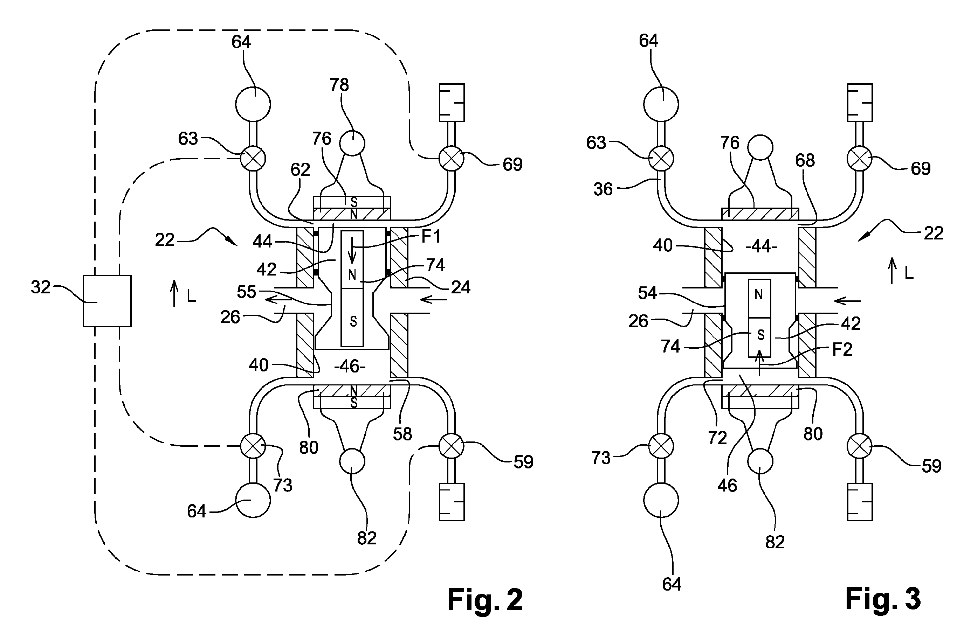

Par la suite, on adoptera de manière non limitative des orientations :
- longitudinale dirigée d'arrière en avant et indiquée par la flèche "L" des figures 2 et 3 ;
- radiale dirigée orthogonalement depuis l'axe longitudinal du piston vers l'extérieur ;
- circonférentielle dirigée orthogonalement aux directions radiale et longitudinale.

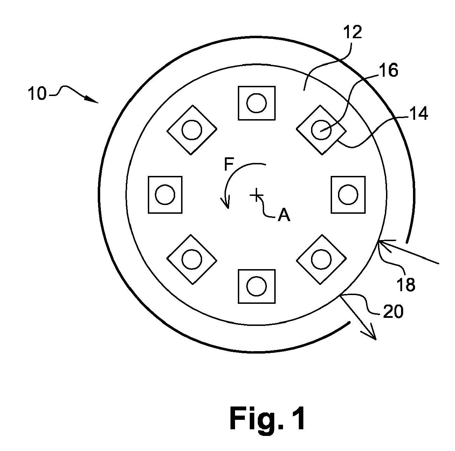

On a représenté à la figure 1 une installation 10 de formage de récipients, en particulier de bouteilles, en matière thermoplastique par soufflage ou étirage-soufflage d'une préforme préalablement chauffée.

Par matière plastique ou thermoplastique, on désigne notamment des matériaux comme le "PET" acronyme de "PolyEthylèneTerephtalate" ou encore le "PEN" pour "PolyEthylèneNaphtalate".

L'installation 10 de moulage illustrée à la figure 1 comporte un carrousel 12 qui est monté rotatif dans le sens anti-horaire autour d'un axe "A", comme cela est indiqué par la flèche "F". Des moules 14 sont agencés à la périphérie du carrousel 12. Chaque moule 14 est associé à des moyens de soufflage ou d'étirage-soufflage comportant une tuyère 16 de soufflage.

Cependant, l'invention est aussi susceptible d'être mise en oeuvre dans une machine de fabrication de type linéaire (et non rotative).

On se reportera au document FR-A-2.764.544 pour de plus amples détails d'un exemple de réalisation des moyens de soufflage ou d'étirage-soufflage.

Lors du fonctionnement, le carrousel 12 est en rotation. Chaque moule 14 passe successivement en un point 18 d'insertion au niveau duquel une préforme est insérée dans ledit moule 14. Pendant la rotation du carrousel 12, ladite préforme est ensuite formée en un récipient par les moyens d'étirage-soufflage associés audit moule 14. Le récipient final obtenu est ensuite déchargé du moule 14 associé lors de son passage à un point 20 de déchargement avant d'entamer un nouveau cycle.

Selon un procédé connu de formage du récipient, la tuyère 16 de soufflage coiffe une ouverture (le col) de la préforme. Puis, lors d'une première étape de présoufflage, un fluide de soufflage à basse pression est injecté, par l'intermédiaire de la tuyère 16, dans la préforme pour la déformer. Le fluide de soufflage à basse pression est par exemple de l'air comprimé à 13 bars.

Le présoufflage est accompagné d'un étirage (ou élongation) de la préforme à l'aide d'une tige d'élongation (non représentée).

Le présoufflage permet notamment d'éviter que, lors de l'étirage, la matière ne se resserre sur la tige. Le contact de la matière avec la tige provoquerait un refroidissement ponctuel sur la préforme préchauffée et ne permettrait pas une mise en forme correcte du récipient.

A l'issue de l'étape de présoufflage, une deuxième étape de soufflage est enclenchée. Lors de cette deuxième étape, un fluide de soufflage à plus haute pression est injecté, par l'intermédiaire de la tuyère 16, dans la préforme pour plaquer la matière le long des parois du moule 14, permettant d'obtenir la forme finale du récipient. Le fluide de soufflage à haute pression est par exemple de l'air comprimé à 40 bars.

Lors d'une dernière étape d'échappement qui est déclenchée à l'issue de la deuxième étape de soufflage, le fluide de soufflage sous pression contenu dans le récipient est évacué par l'intermédiaire de la tuyère 16 avant que le récipient ne soit déchargé du moule 14.

La distribution des différents flux de fluide de soufflage vers ou depuis la préforme est réalisée par au moins une vanne de distribution du flux de fluide de soufflage.

Chaque poste 14, 16 de soufflage comporte ainsi les vannes de distribution suivantes :
- une première vanne de présoufflage qui permet de commander l'alimentation de la préforme en fluide de soufflage à basse pression ;
- une deuxième vanne de soufflage qui permet de commander l'alimentation de la préforme en fluide de soufflage à haute pression ;
- une troisième vanne, par exemple une vanne de récupération, qui permet de diriger le fluide de soufflage sous pression contenu dans le récipient final vers un réservoir de récupération ou vers une conduite d'échappement.

On a représenté aux figures 2 et 3 la vanne 22 de soufflage. Les autres vannes de distribution fonctionnant selon le même principe, on comprendra que l'invention s'appliquera aussi à ces vannes de distribution.

Une telle vanne 22 de distribution comporte généralement un corps 24 de vanne qui comporte une conduite 26 de passage du fluide de soufflage et des moyens 54 d'obturation de la conduite de passage.

Les moyens 54 d'obturation sont commandés par un actionneur qui est lui-même piloté par un dispositif 32 de pilotage.

Un exemple de réalisation d'une telle vanne est décrit plus en détail dans le document de brevet EP-A-2.335.904.

On comprendra que l'invention est aussi applicable à des vannes dites "3 voies" ou encore à d'autres types de vannes susceptibles d'être commandées par un dispositif de pilotage.

La vanne 22 de distribution permet de commander le passage du fluide de soufflage à travers la conduite 26 de passage.

Le corps 24 de la vanne 22 de distribution renferme un cylindre 40 d'axe longitudinal. Un piston 42 transversal est agencé dans le cylindre 40. Le piston 42 divise le cylindre 40 longitudinalement de manière étanche en une première chambre 44 de travail, représentée en haut aux figures 2 et 3, et une deuxième chambre 46 de travail, représentée en bas à la figure 2.

La conduite 26 de passage du fluide de formage traverse radialement le cylindre 40 en traversant le corps 24. Plus particulièrement, un tronçon amont de la conduite 26 de passage débouche ici depuis la droite des figures 2 et 3, tandis qu'un tronçon aval débouche radialement en vis-à-vis depuis la gauche en référence auxdites figures.

Le piston 42 est monté coulissant longitudinalement dans le cylindre 40 entre :
- une première position de commutation de la vanne 22, comme illustré à la figure 2, dans laquelle la première chambre 44 de travail présente un volume minimal tandis que la deuxième chambre 46 présente un volume maximal ; et
- une deuxième position de commutation de la vanne 22, comme illustré à la figure 3, dans laquelle la première chambre 44 de travail présente un volume maximal, tandis que la deuxième chambre 46 présente un volume minimal.

Le piston 42 présente une portion pleine formant les moyens 54 d'obturation de la conduite 26 de passage lorsque le piston 42 occupe sa deuxième position de commutation, comme représenté à la figure 3. Le piston 42 présente dans sa partie inférieure une gorge 55 qui permet, en première position de commutation du piston 42, de faire communiquer le tronçon amont de la conduite 26 de passage avec le tronçon aval, comme cela est illustré à la figure 2.

Ainsi, dans la première position de commutation du piston 42, le fluide de soufflage peut circuler dans la conduite 26 de passage jusqu'à la tuyère 16 dans le cas d'une vanne 22 de soufflage ou de présoufflage, ou bien jusqu'à un réservoir de récupération dans le cas d'une vanne de récupération.

La vanne 22 de distribution comporte des premiers moyens commandés d'échappement du fluide de pilotage contenu dans la deuxième chambre 46. A cet effet, la deuxième chambre 46 comporte ici un orifice 58 d'échappement qui est raccordé à l'atmosphère par l'intermédiaire d'une soupape 59 d'échappement commandée électriquement par le dispositif 32 électronique de pilotage.

La vanne 22 de distribution comporte aussi des premiers moyens commandés de mise en pression pour augmenter la pression d'un fluide de pilotage dans la première chambre 44 de travail au-delà d'une pression d'activation "Pa" produisant une force de pression permettant de déplacer le piston 42 vers sa deuxième position de commutation. A cet effet, la première chambre 44 comporte ici un orifice 62 d'alimentation qui est raccordé à une source 64 de fluide de pilotage sous pression par l'intermédiaire d'une soupape 63 d'admission commandée électriquement par le dispositif 32 électronique de pilotage.

Ces premiers moyens d'échappement et ces premiers moyens de mises en pression permettent de commander le piston 42 depuis sa première position de commutation vers sa deuxième position de commutation.

La vanne 22 de distribution représentée aux figures comporte aussi des moyens pour commander le piston 42 depuis sa deuxième position de commutation vers sa première position de commutation.

Ainsi, la vanne 22 de distribution comporte des deuxièmes moyens commandés d'échappement du fluide de pilotage contenu dans la première chambre 44. A cet effet, comme représenté à la figure 3, la première chambre 44 comporte ici un orifice 68 d'échappement qui est raccordé à l'atmosphère par l'intermédiaire d'une soupape 69 d'échappement commandée électriquement par le dispositif 32 électronique de pilotage.

La vanne 22 de distribution comporte aussi des deuxièmes moyens commandés de mise en pression pour augmenter la pression du fluide de pilotage dans la deuxième chambre 46 de travail au-delà d'une pression d'activation "Pa" produisant une force de pression permettant de déplacer le piston 42 vers sa première position de commutation. A cet effet, la deuxième chambre 46 comporte ici un orifice 72 d'alimentation qui est raccordé à la source 64 de fluide de pilotage sous pression par l'intermédiaire d'une soupape 73 d'admission commandée électriquement par le dispositif 32 électronique de pilotage.

La pression d'activation "Pa" permet de produire une force de pression suffisante pour vaincre les forces résistantes statiques s'opposant au déplacement du piston 42 même en cas d'usure de la vanne 22 de distribution.

En outre, la vanne 22 de distribution comporte aussi des moyens pour donner une impulsion au piston 42 en début de coulissement. Ces moyens permettent d'assister les premiers moyens de mise en pression en initiant le déplacement du piston 42 à l'encontre des forces résistantes statiques s'exerçant sur le piston 42, notamment le frottement statique entre le piston 42 et le cylindre 40.

A cet effet, le piston 42 comporte au moins un élément 74 ferromagnétique. Dans l'exemple représenté, l'élément 74 ferromagnétique forme un barreau d'orientation longitudinale qui est agencé à l'intérieur du piston 42 et qui est solidaire en coulissement longitudinal avec le piston 42.

L'élément 74 ferromagnétique du piston est magnétisé de manière à posséder une aimantation permanente. L'élément 74 ferromagnétique forme ainsi un dipôle magnétique d'axe longitudinal, c'est-à-dire parallèle à la direction de coulissement. Le pôle nord "N" de l'élément 74 est agencé en haut aux figures 2 et 3, à proximité de l'extrémité supérieure du piston 42, tandis que le pôle sud "S" de l'élément 74 est agencé à l'extrémité opposée du piston 42.

La vanne 22 de distribution comporte des premiers moyens commandés d'émission d'un champ magnétique agissant sur l'élément 74 ferromagnétique pour donner au piston 42, dans sa première position, une impulsion de déplacement vers sa deuxième position.

Plus particulièrement, le premier moyen d'émission du champ magnétique est formé par un premier solénoïde 76 susceptible d'être alimenté en courant électrique par une unité 78 électronique de commande pour émettre le champ magnétique associé.

Le premier solénoïde 76 est fixé au corps 24 de la vanne 22, à l'extrémité supérieure du cylindre 40, à proximité de la première chambre, longitudinalement en vis-à-vis du piston 42.

Le champ magnétique émis par le premier solénoïde 76 est orienté de manière à produire une force "F1" de répulsion électromagnétique qui repousse l'élément 74 ferromagnétique vers la deuxième position du piston. Comme représenté à la figure 2, le premier solénoïde 76 est alimenté en courant électrique de manière à présenter un axe polaire coaxial à celui de l'élément 74 ferromagnétique, le pôle nord "N" du premier solénoïde 76 étant tourné vers le pôle nord "N" de l'élément 74 ferromagnétique. Le pôle nord du premier solénoïde 76 repousse ainsi le pôle nord de l'élément 74 ferromagnétique avec une force "F1" de répulsion électromagnétique très supérieure aux forces résistantes s'appliquant au piston 42.

De manière générale, lorsque le piston 42 commence à coulisser, les forces de frottement cinétique sont bien inférieures aux forces résistantes statiques, notamment au frottement statique. Dès lors, la seule pression du fluide de commande est suffisante pour achever le coulissement du piston 42 jusqu'à sa deuxième position.

De ce fait, la configuration présentée aux figures 2 et 3 est particulièrement avantageuse, car l'intensité de la force "F1" de répulsion produite par l'interaction des deux champs magnétiques de l'élément 74 ferromagnétique et du premier solénoïde 76 est très élevée lorsque le premier solénoïde 76 est agencé à proximité de l'élément 74 ferromagnétique. Cette force "F1 de répulsion diminue rapidement à mesure que le piston 42 coulisse vers sa deuxième position de commutation. Ainsi, l'intensité de la force "F1" de répulsion est maximale lorsque le piston 42 occupe sa première position de commutation permettant de donner l'impulsion nécessaire à la mise en mouvement du piston 42.

De plus, une fois que le piston 42 a été mis en mouvement, la seule force de pression est suffisante pour poursuivre le coulissement du piston 42, même si la pression de fluide n'a pas encore atteint sa valeur maximale "Pa". La force "F1" de répulsion n'est alors plus nécessaire au déplacement du piston 42. L'unité 78 électronique de commande peut donc couper l'alimentation électrique du premier solénoïde 76 avant que le piston 42 n'atteigne sa deuxième position de commutation.

De manière symétrique, la vanne 22 comporte aussi des deuxièmes moyens commandés de production d'un champ magnétique agissant sur l'élément 74 ferromagnétique pour donner au piston 42, dans sa deuxième position, une impulsion de déplacement vers sa première position.

Le deuxième moyen d'émission du champ magnétique est aussi formé par un deuxième solénoïde 80 susceptible d'être alimenté en courant électrique par une unité 82 électronique de commande pour émettre le champ magnétique associé.

Le deuxième solénoïde 80 est fixé au corps 24 de la vanne 22, à l'extrémité inférieure du cylindre 40, à proximité de la deuxième chambre 46.

Le champ magnétique émis par le deuxième solénoïde 80 est orienté de manière à produire une force "F2" de répulsion qui repousse l'élément 74 ferromagnétique vers la première position du piston.

Comme représenté à la figure 3, le deuxième solénoïde 80 est alimenté en courant électrique de manière à présenter un axe polaire coaxial à celui de l'élément 74 ferromagnétique, le pôle sud "S" du deuxième solénoïde 80 étant tourné vers le pôle sud "S" de l'élément 74 ferromagnétique. Le pôle sud du deuxième solénoïde 80 repousse ainsi le pôle sud de l'élément 72 ferromagnétique avec une force "F2" supérieure à celle des forces résistantes statiques appliquées au piston 42.

Les deuxièmes moyens d'émission du champ magnétique agissent de la même manière que les premiers moyens d'émission sur le piston 42 afin de lui donner une impulsion de déplacement depuis sa deuxième position de commutation vers sa première position de commutation.

Dans le mode de réalisation représenté aux figures 2 et 3, le piston 42 comporte un unique élément 74 ferromagnétique. Chaque solénoïde 76, 80 coopère avec un pôle associé dudit élément 74 ferromagnétique pour donner l'impulsion de déplacement du piston 42.

En variante non représentée de l'invention, le piston comporte deux éléments ferromagnétiques magnétisés dont chacun est associé à un solénoïde. Chaque élément ferromagnétique est alors agencé à une extrémité associée du piston de manière qu'un de leur pôle soit tourné vers le pôle homologue du solénoïde associé.

On décrit à présent un procédé de mise en oeuvre de la vanne 22 réalisé selon les enseignements de l'invention.

Initialement, la pression dans les deux chambres 44, 46 sont égales, et les deux solénoïdes 76, 80 ne sont pas activés.

Lorsque le piston 42 occupe sa première position de commutation, comme représenté à la figure 3, un ordre de déplacement du piston 42 vers sa deuxième position de commutation est envoyé au dispositif 32 de pilotage et aux unités 78, 82 électronique de commande.

La première chambre 44 de travail est alors alimentée en fluide de commande sous pression par la source 64. L'orifice 68 d'échappement de ladite première chambre 44 est bien entendu obturé et l'orifice 58 d'échappement de la deuxième chambre 46 est ouvert. Ainsi, la pression de fluide augmente progressivement dans la première chambre 44 de travail. Néanmoins, en début de mise sous pression, les forces résistantes statiques s'opposant au coulissement du piston 42 restent supérieures à la force de pression.

Simultanément, l'unité 78 électronique de commande alimente le premier solénoïde 76 en courant électrique de manière à créer un champ magnétique comme décrit précédemment. Le pôle nord "N" ainsi créé du premier solénoïde 76 repousse fortement le pôle nord "N" de l'élément 74 ferromagnétique situé à proximité. Il se produit ainsi une force "F1" de répulsion indiquée par la flèche de la figure 3. Cette force "F1" est très supérieure aux forces résistantes statiques.

Cette force "F1" fournit ainsi l'impulsion nécessaire pour mettre en mouvement le piston 42. L'intensité de cette force "F1" diminue très rapidement à mesure de l'éloignement du piston 42 par rapport au premier solénoïde 76. La seule force "F1" de répulsion ne permet donc pas de faire coulisser le piston 42 jusqu'à sa deuxième position de commutation.

Pendant la mise en mouvement du piston 42, la pression de fluide de pilotage continue à augmenter dans la première chambre 44 de travail.

La force résistante de frottement cinétique étant très inférieure aux forces résistantes statiques, la pression de fluide dans la première chambre 44 nécessaire pour continuer à pousser le piston 42 vers sa deuxième position de commutation est atteinte quasiment instantanément. Ladite pression nécessaire étant inférieure à la pression "Pa" maximale, le piston 42 poursuit son coulissement même si la pression "Pa" de fluide maximale n'a pas été atteinte.

La force de pression créée par la pression de fluide dans la première chambre 44 prend ainsi directement le relais de la force "F1" de répulsion électromagnétique pour poursuivre le coulissement du piston 42 jusqu'à sa deuxième position de commutation.

Le premier solénoïde 76 peut ainsi être désactivé avant même que le piston 42 n'ait atteint sa deuxième position de commutation.

L'activation du premier solénoïde 76 simultanément à la mise en pression de la première chambre permet de raccourcir sensiblement le temps de réponse de la vanne 22 en surpassant la force résistante statique du piston avant même que la pression maximale de fluide de pilotage ne soit atteinte dans la première chambre 44 de travail.

En outre, le temps de réponse entre l'ordre de commutation de la vanne 22 et la commutation effective de la vanne 22 demeure stable malgré l'usure du cylindre 40 et/ou du piston 42 car la force de répulsion électromagnétique est très supérieure aux forces résistantes statiques.

Bien entendu, le piston 42 peut être commandé depuis sa deuxième position de commutation vers sa première position de commutation selon un procédé identique faisant intervenir le deuxième solénoïde 80.

Ainsi, l'élément 74 ferromagnétique et les solénoïdes 76, 80 permettent d'assister le fluide de pilotage pour commuter la vanne 22 de distribution en donnant une impulsion brève mais puissante au piston 42 de la vanne 22.

## Revendications

1. Installation (10) de formage d'un récipient en matériau thermoplastique par soufflage d'une préforme au moyen d'un fluide de soufflage sous pression, l'installation (10) comportant au moins une vanne (22) de distribution du flux de fluide de soufflage, la vanne (22) de distribution comportant :
- un piston (42) qui divise de manière étanche un cylindre (40) fixe en une première chambre (44) de travail et une deuxième chambre (46) de travail, et qui est monté coulissant dans le cylindre (40) entre une première position de commutation dans laquelle la deuxième chambre (46) présente un volume maximal et une deuxième position de commutation dans laquelle la deuxième chambre (46) présente un volume minimal ;
- des premiers moyens commandés de la pression d'un fluide de pilotage dans la première chambre (44) de travail permettant de déplacer le piston (42) vers sa deuxième position de commutation par augmentation de la pression du fluide de pilotage ;
**caractérisée en ce que** le piston (42) comporte au moins un élément (74) ferromagnétique, la vanne (22) de distribution comportant des premiers moyens (76) commandés d'émission d'un champ magnétique agissant sur l'élément (74) ferromagnétique pour donner au piston (42), dans sa première position, une impulsion de déplacement vers sa deuxième position.

2. Installation (10) selon la revendication précédente, **caractérisée en ce que** l'élément (74) ferromagnétique du piston possède une aimantation permanente de manière à former un dipôle magnétique.

3. Installation (10) selon la revendication précédente, **caractérisée en ce que** le champ magnétique émis par les premiers moyens (76) commandés est orienté de manière à repousser l'élément (74) ferromagnétique vers la deuxième position du piston (42).

4. Installation (10) selon l'une quelconque des revendications 2 ou 3, **caractérisée en ce que** l'axe polaire de l'élément (74) ferromagnétique est orienté parallèlement à la direction de coulissement du piston (42).

5. Installation (10) selon l'une quelconque des revendications 3 ou 4, **caractérisé en ce que** les premiers moyens (76) d'émission du champ magnétique sont agencés à une extrémité du cylindre (40), à proximité de la première chambre (44).

6. Installation (10) selon l'une quelconque des revendications précédentes, **caractérisée en ce qu'**elle (10) comporte des deuxièmes moyens commandés de la pression d'un fluide de pilotage dans la deuxième chambre (46) de travail permettant de déplacer le piston (42) depuis sa deuxième position vers sa première position de commutation par augmentation de la pression du fluide de pilotage.

7. Installation (10) selon la revendication précédente, **caractérisée en ce qu'**elle comporte des deuxième moyens (80) commandés de production d'un champ magnétique agissant sur l'élément (74) ferromagnétique pour donner au piston (42), dans sa deuxième position, une impulsion de déplacement vers sa première position.

8. Installation (10) selon la revendication précédente, **caractérisée en ce que** le champ magnétique émis par les deuxièmes moyens (80) d'émission du champ magnétique est orienté de manière à repousser l'élément (74) ferromagnétique vers la deuxième position du piston (42).

9. Installation selon l'une quelconque des revendications 7 ou 8, **caractérisée en ce que** les deuxièmes moyens (80) d'émission du champ magnétique sont agencés à une extrémité du cylindre (40) opposée aux premiers moyens (76) démission du champ magnétique, à proximité de la deuxième chambre (46).

10. Installation (10) selon l'une quelconque des revendications précédentes, **caractérisée en ce que** chaque moyen d'émission du champ magnétique est formé par un solénoïde (76, 80) associé susceptible d'être alimenté en courant électrique pour émettre un champ magnétique.

11. Procédé pour commander le coulissement du piston (42) de la vanne (22) de l'installation (10) selon l'une quelconque des revendications précédentes depuis l'une de ses positions de commutation dite "initiale" jusqu'à l'autre position de commutation dite "finale", **caractérisé en ce que** les moyens (76, 80) associés de production du champ magnétique et les moyens associés commandés d'augmentation de pression sont activés simultanément.

12. Procédé selon la revendication précédente, **caractérisé en ce que** les moyens (76, 80) de production du champ magnétique sont désactivés avant que le piston (42) n'ait atteint sa position de commutation finale.

## Patentansprüche

1. Anlage (10) zum Umformen eines Behälters aus thermoplastischem Material durch Blasen eines Vorformlings mittels eines Blasfluids unter Druck, wobei die Anlage (10) mindestens ein Ventil (22) zur Verteilung des Blasfluidstroms aufweist, wobei das Ventil (22) zur Verteilung aufweist:
- einen Kolben (42), der einen feststehenden Zylinder (40) in einer ersten Arbeitskammer (44) und eine zweite Arbeitskammer (46) dicht voneinander trennt, und der im Zylinder (40) zwischen einer ersten Schaltposition, in der die zweite Kammer (46) ein maximales Volumen besitzt, und einer zweiten Schaltposition, in der die zweite Kammer (46) ein minimales Volumen besitzt, verschiebbar montiert ist;
- erste gesteuerte Mittel des Drucks eines Kontrollfluids in der ersten Arbeitskammer (44), die es gestatten, den Kolben (42) hin zu seiner zweiten Schaltposition durch Erhöhung des Drucks des Kontrollfluids zu bewegen;
**dadurch gekennzeichnet, dass** der Kolben (42) mindestens ein ferromagnetisches Element (74) aufweist, wobei das Ventil (22) zur Verteilung erste gesteuerte Mittel (76) zur Emission eines Magnetfelds aufweist, welches auf das ferromagnetische Element (74) einwirkt, um dem Kolben (42), in seiner ersten Position, einen Impuls zur Bewegung hin zu seiner zweiten Position zu geben.

2. Anlage (10) nach dem vorangehenden Anspruch, **dadurch gekennzeichnet, dass** das ferromagnetische Element (74) des Kolbens eine permanente Magnetisierung besitzt, sodass ein magnetischer Dipol gebildet wird.

3. Anlage (10) nach dem vorangehenden Anspruch, **dadurch gekennzeichnet, dass** das durch die ersten gesteuerten Mittel (76) emittierte Magnetfeld so ausgerichtet ist, dass das ferromagnetische Element (74) hin zu der zweiten Position des Kolbens (42) geschoben wird.

4. Anlage (10) nach einem der Ansprüche 2 oder 3, **dadurch gekennzeichnet, dass** die Polachse des ferromagnetischen Elements (74) parallel zur Verschiebungsrichtung des Kolbens (42) ausgerichtet ist.

5. Anlage (10) nach einem der Ansprüche 3 oder 4, **dadurch gekennzeichnet, dass** die ersten Mittel (76) zur Emission des Magnetfelds an einem Ende des Zylinders (40), in der Nähe der ersten Kammer (44), ausgebildet sind.

6. Anlage (10) nach einem der vorangehenden Ansprüche, **dadurch gekennzeichnet, dass** sie (10) zweite gesteuerte Mittel des Drucks eines Kontrollfluids in der zweiten Arbeitskammer (46) aufweist, die es gestatten, den Kolben (42) von seiner zweiten Position hin zu seiner ersten Schaltposition durch Erhöhung des Drucks des Kontrollfluids zu bewegen.

7. Anlage (10) nach dem vorangehenden Anspruch, **dadurch gekennzeichnet, dass** sie zweite gesteuerte Mittel (80) zur Herstellung eines Magnetfelds aufweist, welches auf das ferromagnetische Element (74) einwirkt, um dem Kolben (42), in seiner zweiten Position, einen Impuls zur Bewegung hin zu seiner ersten Position zu geben.

8. Anlage (10) nach dem vorangehenden Anspruch, **dadurch gekennzeichnet, dass** das durch die zweiten gesteuerten Mittel (80) zur Emission des Magnetfelds emittierte Magnetfeld so ausgerichtet ist, dass das ferromagnetische Element (74) hin zu der zweiten Position des Kolbens (42) geschoben wird.

9. Anlage nach einem der Ansprüche 7 oder 8, **dadurch gekennzeichnet, dass** die zweiten Mittel (80) zur Emission des Magnetfelds an einem Ende des Zylinders (40), das den ersten Mitteln (76) zur Emission des Magnetfelds gegenüberliegt, in der Nähe der zweiten Kammer (46), ausgebildet sind.

10. Anlage (10) nach einem der vorangehenden Ansprüche, **dadurch gekennzeichnet, dass** jedes Mittel zur Emission des Magnetfelds durch ein zugeordnetes Solenoid (76, 80) gebildet wird, das mit elektrischem Strom versorgt werden kann, um ein Magnetfeld zu emittieren.

11. Verfahren zur Steuerung der Verschiebung des Kolbens (42) des Ventils (22) der Anlage (10) nach einem der vorangehenden Ansprüche von einer seiner Schaltpositionen, genannt "initial", bis zur anderen Schaltposition, genannt "final", **dadurch gekennzeichnet, dass** die zugeordneten Mittel (76, 80) zur Herstellung des Magnetfelds und die zugeordneten gesteuerten Mittel zur Erhöhung des Drucks gleichzeitig aktiviert werden.

12. Verfahren nach dem vorangegangenen Anspruch, **dadurch gekennzeichnet, dass** die Mittel (76, 80) zur Herstellung des Magnetfelds deaktiviert werden, bevor der Kolben (42) seine finale Schaltposition erreicht hat.

## Claims

1. Installation (10) for forming a container made of thermoplastic material by blow-moulding a preform by means of a pressurized blowing fluid, the installation (10) comprising at least one valve (22) for dispensing the flow of blowing fluid, the dispensing valve (22) comprising:
- a piston (42) which tightly divides a fixed cylinder (40) into a first working chamber (44) and a second working chamber (46), and which is mounted to slide in the cylinder (40) between a first switching position in which the second chamber (46) exhibits a maximum volume and a second switching position in which the second chamber (46) exhibits a minimum volume;
- first controlled means for the pressure of a control fluid in the first working chamber (44) making it possible to displace the piston (42) to its second switching position by increasing the pressure of the control fluid;
**characterized in that** the piston (42) comprises at least one ferromagnetic element (74), the dispensing valve (22) comprising first controlled means (76) for emission of a magnetic field acting on the ferromagnetic element (74) to give the piston (42), in its first position, an impulse for displacement to its second position.

2. Installation (10) according to the preceding claim, **characterized in that** the ferromagnetic element (74) of the piston has a permanent magnetization so as to form a magnetic dipole.

3. Installation (10) according to the preceding claim, **characterized in that** the magnetic field emitted by the first controlled means (76) is oriented so as to push back the ferromagnetic element (74) to the second position of the piston (42).

4. Installation (10) according to either one of Claims 2 and 3, **characterized in that** the polar axis of the ferromagnetic element (74) is oriented parallel to the direction of sliding of the piston (42).

5. Installation (10) according to either one of Claims 3 and 4, **characterized in that** the first means (76) for emission of the magnetic field are arranged at an end of the cylinder (40), in proximity to the first chamber (44).

6. Installation (10) according to any one of the preceding claims, **characterized in that** it (10) comprises second controlled means for the pressure of a control fluid in the second working chamber (46) making it possible to displace the piston (42) from its second switching position to its first switching position by increasing the pressure of the control fluid.

7. Installation (10) according to the preceding claim, **characterized in that** it comprises second controlled means (80) for production of a magnetic field acting on the ferromagnetic element (74) to give the piston (42), in its second position, an impulse for displacement to its first position.

8. Installation (10) according to the preceding claim, **characterized in that** the magnetic field emitted by the second means (80) for emission of the magnetic field is oriented so as to push back the ferromagnetic element (74) to the second position of the piston (42).

9. Installation according to either one of Claims 7 and 8, **characterized in that** the second means (80) for emission of the magnetic field are arranged at that end of the cylinder (40) which is opposite the first means (76) for emission of the magnetic field, in proximity to the second chamber (46).

10. Installation (10) according to any one of the preceding claims, **characterized in that** each means for emission of the magnetic field is formed by an associated solenoid (76, 80) capable of being supplied with electric current to emit a magnetic field.

11. Method for controlling the sliding of the piston (42) of the valve (22) of the installation (10) according to any one of the preceding claims from one of its switching positions, called "initial" position, to the other switching position, called "final" position, **characterized in that** the associated means (76, 80) for production of the magnetic field and the associated controlled means for increasing pressure are activated simultaneously.

12. Method according to the preceding claim, **characterized in that** the means (76, 80) for production of the magnetic field are deactivated before the piston (42) has reached it final switching position.
